# EUROPÄISCHE PATENTSCHRIFT

(11) **EP 0 355 389 B1**
(45) Veröffentlichungstag und Bekanntmachung des Hinweises auf die Patenterteilung: **08.09.1993**
(21) Anmeldenummer: 89113046.0
(22) Anmeldetag: 15.07.1989
(51) Int. Cl.: F16C 13/00

(54) **Durchbiegungssteuerbare Walze**
Deflexion controlled roll
Rouleau à fléchissement réglable

(30) Priorität: 17.08.1988 DE 3827836
(43) Veröffentlichungstag der Anmeldung: 28.02.1990
(73) Patentinhaber: Eduard Küsters Maschinenfabrik GmbH & Co. KG, 47805 Krefeld (DE)
(72) Erfinder: Schrörs, Günther, D-4154 Tönisvorst 1 (DE)
(74) Vertreter: Palgen, Peter, Dr. Dipl.-Phys.

(56) Entgegenhaltungen:
- EP-A- 0 252 251
- DE-A- 2 432 467
- DE-A- 2 557 972
- DE-A- 2 943 644
- FR-A- 2 393 188

## Beschreibung

Die Erfindung bezieht sich auf eine Walze der dem Oberbegriff des Anspruchs 1 entsprechenden Art.

Eine derartige Walze ist aus der DE-A-24 32 467 bekannt. Bei der bekannten Ausführungsform ist ein übliches kolbenartiges hydraulisches Stützelement in einer Zylinderbohrung des Querhauptes geführt. Von der unter dem Stützelement gebildeten Zylinderkammer führen Drosselbohrungen in die Lagertaschen in der Anlagefläche des Stützelements, mit welcher dieses am Innenumfang der Hohlwalze anliegt.

Im Boden der Zylinderkammer ist ein in Achsrichtung der Zylinderkammer verstellbarer Gewindekörper mit einer Zylinderbohrung vorgesehen, in die ein kleiner Kolben eintaucht, der über eine Art Kolbenstange mit dem Stützelement derart bewegungsverbunden ist, daß der kleine Kolben, wenn das Stützelement in seine Zylinderbohrung im Querhaupt eintaucht, seinerseits in seine Zylinderkammer eingeschoben wird. Die Zylinderkammer des kleinen Kolbens ist über einen in seinem Durchgangsquerschnitt durch ein Drosselventil regulierbaren Kanal mit dem Zylinderraum unter dem Stützelement verbunden. Der kleine Kolben wirkt auf diese Weise wie ein Dämpfungselement, insofern er die Bewegung des Stützelementes mitmacht und dabei die Druckflüssigkeit aus der Zylinderkammer des kleinen Kolbens verdrängt oder in diese eingesaugt werden muß. Die Kraft, die der kleine Kolben auf das Stützelement ausübt, ist nur einseitig gerichtet, nämlich gegen den Innenumfang der Hohlwalze, und außerdem vom Druck in der Zylinderkammer des Stützelements abgeleitet.

Bei der durchbiegungssteuerbaren Walze aus der nicht vorveröffentlichten EP-A-0 340 525 ist die eigentliche Zylinderkammer des Stützelements, aus der die Lagertaschen versorgt werden, von einer ringförmigen Zylinderkammer umgeben, in die ein mit dem Querhaupt verbundener Ringkolben eingreift. Hierdurch ist eine zusätzliche ringförmige Zylinderkammer gebildet, die separat mit Druckflüssigkeit beaufschlagt werden kann und mittels derer grundsätzlich auch von dem Innenumfang der Hohlwalze weggerichtete Kräfte auf das Stützelement ausgeübt werden können, wenn nämlich die Druckflüssigkeit unter Unterdruck gesetzt wird. Dies ist allerdings nicht die offenbarte Betriebsweise dieses Stützelements.

Der Erfindung liegt die Aufgabe zugrunde, die Steuerungsmöglichkeiten einer durchbiegungssteuerbaren Walze der gattungsgemäßen Art zu erweitern.

Diese Aufgabe wird durch die in Anspruch 1 wiedergegebene Erfindung gelöst.

Dadurch, daß mittels der zusätzlichen Kolben/Zylindereinheit Kräfte auf das Stützelement ausgeübt werden können, die unabhängig von dem Druck im Zylinderraum des Stützelements einstellbar sind, kann das Betriebsverhalten des Stützelements in mannigfacher Weise beeinflußt werden, wie nachstehend dargestellt wird.

Eine wichtige Ausgestaltung der Erfindung ist Gegenstand des Anspruchs 2, der das Zusammenwirken der erfindungsgemäß betätigbaren zusätzlichen Kolbenzylindereinheit mit einer mengengeregelten Speisung des Zylinderraums unter dem Stützelement beinhaltet.

Eine Mengenregelung der für die Lagertaschen des Stützelements einer durchbiegungssteuerbaren Walze bestimmten Druckflüssigkeit ist schon in der EP-A-0 252 251 beschrieben. Bei dieser bekannten Ausführungsform werden die Lagertaschen über die Drosselbohrungen von einer volumetrischen Pumpe versorgt. Die Zylinderkammer unter dem Stützelement ist geschlossen und wird von druckgeregelter Druckflüssigkeit beaufschlagt, die die gesamte Anpreßkraft liefert. Bei der Erfindung ist hingegen die Anpreßkraft nicht von der mengengeregelten Druckflüssigkeit getrennt, sondern wird zum großen Teil von dieser ausgeübt. Die mengengeregelte Druckflüssigkeit gelangt unter das Stützelement, preßt dieses an den Innneumfang der Hohlwalze an und tritt erst dann in die Lagertaschen über und wirkt in diesen gegen den Innenumfang der Hohlwalze.

Eine Walze der erfindungsgemäßen Art kann in den folgenden Betriebsarten arbeiten:
a) Wenn mittels der zusätzlichen Kolben/Zylindereinheit keine Kraft in irgendeiner Richtung ausgeübt wird und es frei beweglich ist, arbeitet das Stützelement wie ein gewöhnliches Stützelement einer durchbiegungssteuerbaren Walze. Die Regelung der von dem Stützelement gegen den Innenumfang der Hohlwalze ausgeübten Kraft erfolgt in der üblichen Weise durch Regelung des Druckes in dem Zylinderraum unterhalb des Stützelements. Die Größe des Spalts zwischen der Anlagefläche des Stützelements und dem Innenumfang der Hohlwalze, durch den die Druckflüssigkeit aus den Lagertaschen abströmt, bleibt auch bei unterschiedlichen Drücken in dem Zylinderraum unter dem Stützelement im wesentlichen konstant.
b) Wenn bei der vorgenannten Betriebsweise durch die zusätzliche Kolben/Zylindereinheit eine Kraft ausgeübt wird, die das Stützelement vom Innenumfang der Hohlwalze wegzieht, so sinkt die von dem Stützelement ausgeübte Kraft entsprechend ab, wobei sich h ändert. Bei einer Absenkung des Drucks im Zylinderraum des Stützelements würde zwar ebenfalls die von diesem ausgeübte Kraft kleiner werden, jedoch bliebe h dabei im wesentlichen gleich.
c) Wenn der Zylinderkammer des Stützelements eine konstante Druckflüssigkeitsmenge zugeführt wird , so stellt sich der dann erzeugte Druck auf einen Wert ein der durch die Abströmungsverhältnisse bestimmt wird. Der Druckabfall an der Drosselbohrung ist für alle Linienkräfte, d.h. für alle Drücke unter dem Stützelement konstant. Die Abströmungsverhältnisse können durch die an der zusätzlichen Kolben/Zylindereinheit ausgeübten Kräfte geändert werden. Wird an der zusätzlichen Kolben/Zylindereinheit eine gegen den benachbarten Innenumfang gerichtete Zusatzkraft eingestellt, so wird der Spalt enger und steigt die von dem Stützelement gegen den Innenumfang der Hohlwalze ausgeübte Kraft an. Bei einer vom Innenumfang weggerichteten Zusatzkraft wird der Spalt größer und sinkt die Kraft.Auf diese Weise kann trotz eines konstanten zugeführten Volumenstroms an Druckflüssigkeit die Kraft gesteuert werden.
   Die Zuführung eines konstanten Volumenstroms hat eine besondere Bedeutung in dem Fall, daß die Hohlwalze von innen über die Druckflüssigkeit mitbeheizt werden soll. Die übertragene Wärmemenge ist in erster Linie von der durchgesetzten Gesamtmenge an beheizter Druckflüssigkeit mit abhängig. Durch die Konstanthaltung des Volumenstroms können also die auf die Hohlwalze innen aufgebrachte Wärmemenge und damit die Temperatur der Hohlwalze im wesentlichen konstant gehalten werden, wobei der Druck bzw. die von dem Stützelement ausgeübte Kraft und damit die Linienkraftverteilung unabhängig von der Temperatur durch die Kräfte an der zusätzlichen Kolben/Zylindereinheit geregelt werden können.
   Die Spaltgröße hat in diesem Zusammenhang ebenfalls eine Bedeutung, weil beim Durchströmen des engen Spaltes zusätzliche Wärme entsteht. Diese Wärmemengen "zweiter Ordnung" können sich durchaus schon in unerwünschten Temperaturschwankungen am Außenumfang der Hohlwalze bemerkbar machen.
d) Wenn die Walze durch die Druckflüssigkeit beheizt wird und diese dem Zylinderraum unter dem Stützelement also mit einer bestimmten erhöhten Temperatur zugeführt wird, wenn ferner der Druck dieser Druckflüssigkeit geregelt wird und die zusätzliche Kolben/Zylindereinheit eine konstante Kraft auf das Stützelement ausübt, so sind bei unterschiedlichen Temperaturen wegen der Temperaturabhängigkeit der Viskosität und der Abhängigkeit des Druckabfalls an einer Drosselbohrung von der Viskosität der Druckabfall an einer als Drosselbohrung ausgebildeten Drosselstelle und ebenfalls die Spaltgröße von der Temperatur der Druckflüssigkeit abhängig.
e) Wenn hingegen die Drosselbohrung bei einer beheizten Walze durch eine in den Drosselkanal eingesetzte Blende ersetzt wird, die viskositätsunabhängig arbeitet und wenn dann dem Zylinderraum unter dem Stützelement ein konstantes Volumen an Druckflüssigkeit zugeführt wird, so kann die Steuerung der Linienkraft erfolgen, indem die zusätzliche Kolben/Zylindereinheit keine Kräfte auf das Stützelement ausübt. Die Spaltgröße h ist hierbei konstant.
   Hierbei ist also die an dem Stützelement austretende Menge an Druckflüssigkeit bei unterschiedlichen Drücken konstant, so daß also auf diese Weise die Hauptmenge der auf die Hohlwalze übertragenen Wärme konstant ist. Außerdem sind aber auch die Spaltgröße h und damit die im Spalt entstehenden Wärmemengen zweiter Ordnung konstant und äußern sich nicht in unerwünschten Veränderungen des Temperaturprofils längs der Hohlwalze. Bei der hier behandelten Betriebsweise sind also Temperaturverteilung und Linienkraftverteilung tatsächlich weitestgehend unabhängig voneinander regelbar.
f) Bei Walzen mit innerem Hub, bei denen sich also die Hohlwalze als Ganzes quer zur ihrer Achse gegenüber dem Querhaupt verlagern kann, kann die zusätzliche Kolben/Zylindereinheit zur Realisierung einer Gleichlaufsteuerung beim Anlegen der Walze zum Schließen eines Walzspalts dienen. Wenn der Walzspalt vorher geöffnet war, um eine Bahn einzufädeln, wird auf diese Weise erreicht, daß die Walze nicht an einem Ende zuerst an der Gegenwalze bzw. der Bahn anliegt, sich also schiefstellt. Die Gleichlaufsteuerung wird erreicht, indem die zusätzliche Kolben/Zylindereinheit der Stützelemente an den Enden der Hohlwalze eine gegen deren Innenumfang gerichtete Kraft ausüben und die bei einer Verlagerung der Hohlwalze aus den gegenüberliegenden Zylinderkammern der zusätzlichen Kolben/Zylindereinheit abströmenden Druckflüssigkeitsmengen auf einen gleichen Wert eingeregelt werden.

In der Zeichnung sind Ausführungsbeispiele der Erfindung schematisch dargestellt.
Fig. 1 zeigt eine Ansicht eines Walzenpaars, bei welchem die erfindungsgemäße Walze Unterwalze ist;
Fig. 2 und 3 zeigen durch die Achse der Walze gehende Längsschnitte zweier Ausführungsformen eines einzelnen Stützelements.

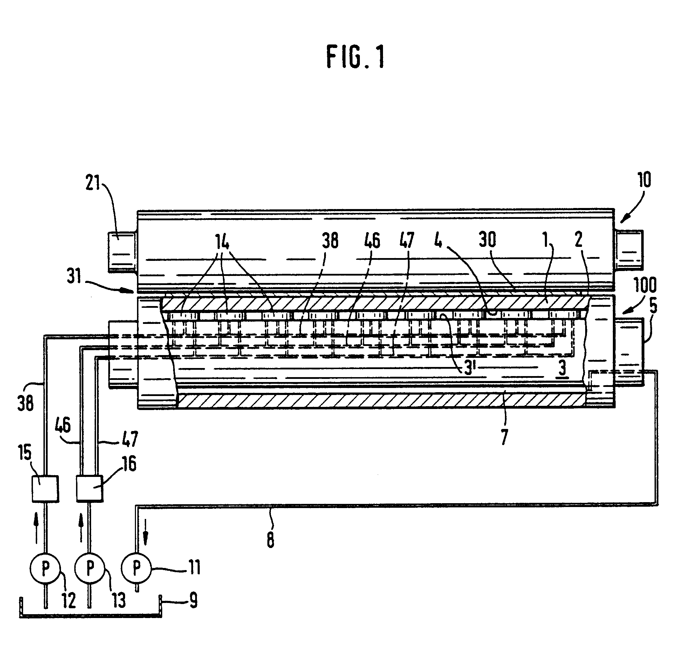

Das in Fig. 1 dargestellte Walzenpaar umfaßt eine Oberwalze 10 und eine Unterwalze 100, zwischen denen eine Warenbahn 30 einer Druckbehandlung in dem Walzspalt 31 ausgesetzt wird. Die Oberwalze 10 ist eine konventionelle massive Walze. Die Unterwalze 100 hingegen umfaßt eine umlaufende Hohlwalze 1, deren Außenumfang 2 den arbeitenden Walzenumfang bildet und die der Länge nach von einem undrehbaren Querhaupt 3 durchgriffen ist, welches allseitig Abstand zum Innenumfang 4 der Hohlwalze 1 beläßt, so daß es sich innerhalb der Hohlwalze 1 verlagern kann, ohne mit dem Innenumfang 4 in Berührung zu kommen. Die Hohlwalze 1 kann an den Enden auf nicht dargestellten Lagern auf dem Querhaupt 3 abgestützt sein. In diesem Fall betrifft die Verlagerung nur die Durchbiegung des Querhauptes 3 im Innern der Hohlwalze 1. Die Hohlwalze 1 kann aber in einer alternativen Ausführungsform, die auch als eine solche mit "innerem Hub" bezeichnet wird, sich als Ganzes in der Wirkebene gegenüber dem Querhaupt 3 verlagern. Die Hohlwalze 1 ist in diesem Fall nicht über die Lager auf dem Querhaupt 3 abgestützt, sondern nur in der Wirkebene geführt. Die Verlagerung betrifft hierbei die Verlagerung in der Führung, der sich die Durchbiegung überlagert.

Die Zapfen 21 der Oberwalze 10 sowie die aus der Hohlwalze 1 an deren Enden vorstehenden Enden 5 des Querhauptes 3 sind im nicht dargestellten Walzenständer befestigt.

Auf der gegen den Walzspalt 31 gerichteten Oberseite 3′ des Querhauptes 3 sind über die Länge der Hohlwalze 1 verteilt mehrere,in dem dargestellten Ausführungsbeispiel neun,hydraulische Stützelemente 14 angeordnet, die mit ihrer dem Innenumfang 4 der Hohlwalze 1 in der Gestalt angepaßten Anlagefläche 24 am Innenumfang der Hohlwalze anliegen. In der Anlagefläche 24 sind flache Lagertaschen 25 ausgebildet, die einen wesentlichen Teil der Anlagefläche 24 einnehmen, so daß von ihr nur berandende Stege übrigbleiben. In dem Ausführungsbeispiel weist das Stützelement 14 eine Achse A auf und ist im Querschnitt kreisrund. Die Anlagefläche 24 weist einen um den ganzen Umfang herumgehenden Randsteg 26 sowie einen diametralen Mittelsteg 27 auf, so daß zwei etwa halbkreisscheibenförmige Lagertaschen 25 gebildet sind.

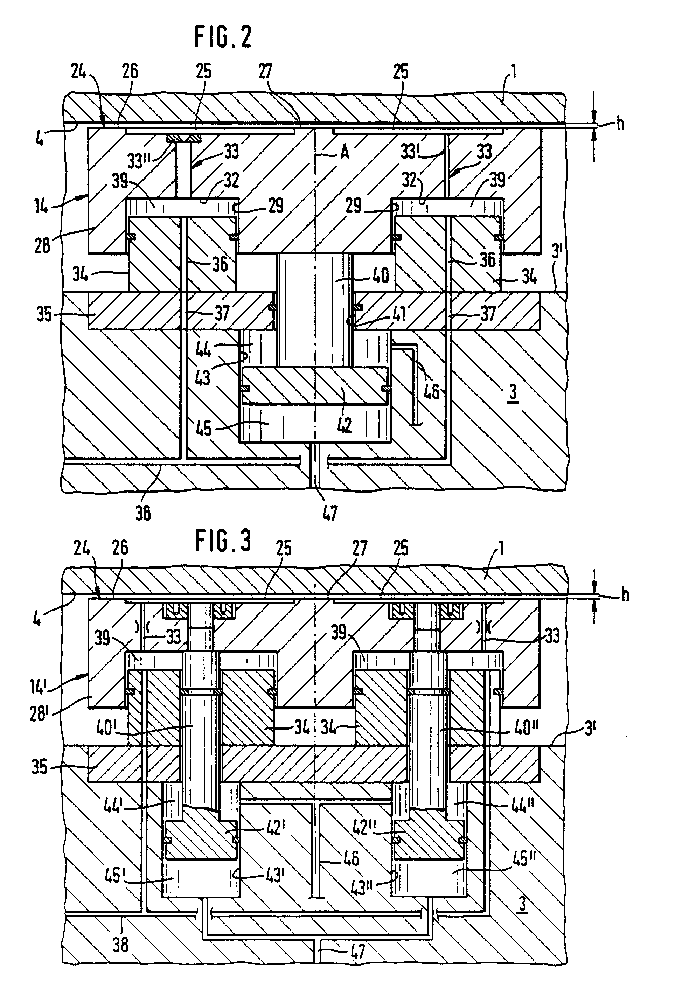

Das Stützelement 14 umfaßt einen Körper 28 in Form einer dicken zylindrischen Scheibe, die sich normalerweise mit Abstand oberhalb der Oberseite 3′ des Querhauptes 3 befindet und in deren Unterseite in der aus Fig. 2 ersichtlichen Weise zwei Zylinderbohrungen 29 in einer durch die Achse gehenden Ebene angebracht sind. Die Zylinderbohrungen 29 haben einen Boden 32, von welchem ein Drosselkanal 33 ausgeht, der in der jeweils darüberliegenden Lagertasche 25 mündet. Der Drosselkanal 33 kann als enge Bohrung 33′ ausgebildet sein, die über ihre ganze Länge ihren geringen Querschnitt beibehält, wie es in Fig. 2 rechts dargestellt wird. Der Drosselkanal 33 kann aber auch eine Bohrung relativ großen Querschnitts sein, die nur an einer Stelle eine Blende 33˝ aufweist, wie es in Fig. 2 links dargestellt ist. Die Ausführung mit der Blende hat die Eigenschaft, weitgehend viskositätsunabhängig zu sein, so daß auch bei Hydraulikflüssigkeiten stark unterschiedlicher Temperatur der Drosseleffekt im wesentlichen der gleiche bleibt.

In die Zylinderbohrungen 29 greifen gemäß Fig. 2 von unten mit einer Dichtung versehene Kolben 34 ein, die auf einer in die Oberseite 3′ des Querhaupts 3 eingelassenen Platte 35 befestigt sind. Die Kolben 34 bzw. die Platte 35 weisen fluchtende Durchgangsbohrungen 36 bzw. 37 auf, die mit einer Zuleitung 38 in Verbindung stehen, über die die Zylinderkammer 39 oberhalb des jeweiligen Kolbens 34 mit Druckflüssigkeit versorgt werden kann.

Der Körper 28 des Stützelements 14 weist an seiner Unterseite einen zur Achse A koaxialen zylindrischen Ansatz 40 auf, der die Platte 35 in einer Bohrung 41 derselben abgedichtet durchgreift und an seinem unteren Ende einen Kolben 42 trägt, der in einer Zylinderbohrung 43 des Querhauptes 3 abgedichtet verschiebbar ist. Der Kolben 42 unterteilt die Zylinderbohrung 43 in eine auf der Kolbenstangenseite gelegene Zylinderkammer 44 und eine endseitige Zylinderkammer 45, die mit Zuleitungen 46 bzw. 47 im Querhaupt 3 in Verbindung stehen.

Die Funktion des Stützelements 14 ist folgende:
Wird den Zylinderkammern 39 über die Zuleitung 38 hydraulische Druckflüssigkeit zugeführt, so wird das Stützelement 14 mit der Anlagefläche 24 gegen den Innenumfang 4 der Hohlwalze 1 angepreßt. Über die Drosselkanäle 33 gelangt Druckflüssigkeit aus den Zylinderkammern 39 in die Lagertaschen 25 und übt in dem entsprechenden Querschnitt einen Druck gegen den Innenumfang 4 aus. Die über die Zuleitung 38 ständig nachgelieferte Druckflüssigkeit strömt über die Berandungen 26,27 der Lagertaschen ab und bildet in diesen Bereichen einen tragfähigen Flüssigkeitsfilm. Der Stützstempel 14 liegt also insgesamt über eine Flüssigkeitsschicht an dem Innenumfang 4 an.

Erweitert sich der Spalt h zwischen der Anlagefläche 24 und dem Innenumfang 4 unter dem Druck in den Lagertaschen 25, so kann mehr Druckflüssigkeit über die Stege 26,27 abströmen und der Druck in den Lagertaschen 25 bricht sofort zusammen, weil die Nachlieferung aus den Zylinderkammern 39 gedrosselt erfolgt. Durch das Absinken des Druckes verringert sich der Spalt h wieder, und es stellt sich im Ergebnis bei einem bestimmten Druck in der Zylinderkammer 39 ein Gleichgewicht mit einem bestimmten Wert von h ein.

Mit dem Stützelement 14 ist nun die zusätzliche Kolben/Zylindereinheit 42,43 verbunden, mittels deren unabhängig von der über die Zuleitung 38 den Zylinderkammern 39 zugeführten Druckflüssigkeit auf das Stützelement 14 Zusatzkräfte ausgeübt werden können. Bei einer Füllung der oberen Zylinderkammer 44 über die Leitung 46 wird das Stütztlement 14 von dem Innenumfang 4 der Hohlwalze 1 weggezogen, bei einer Füllung der Zylinderkammer 45 über die Leitung 47 zusätzlich gegen den Innenumfang 4 angepreßt.

Die Beaufschlagung der Stützelemente 14 ist aus Fig. 1 ersichtlich. Die Pumpe 12 saugt aus dem Vorratsbehälter 9 Druckflüssigkeit an und führt sie über die Steuereinrichtung 15 und die Zuleitung 38 den einzelnen Stützelementen 14 zu. Zur Beeinflussung des Liniendrucks kann auch Gruppen von Stützelementen 14 oder sogar jedem einzelnen dieser Stützelemente 14 ein separater Druck zugeführt werden. Die Leitung 38 ist nur symbolisch als eine einzige Leitung dargestellt, kann aber in der Praxis auch aus mehreren zu einzelnen Gruppen von Stützelementen oder einzelnen Stützelementen hinführenden Leitungen bestehen, denen in der Steuereinrichtung 15 unterschiedliche Drücke aufgeprägt werden. Eine besondere Eigenschaft der Steuereinrichtung 15 liegt darin, daß sie zur Mengenregelung befähigt ist, d.h. einzelnen Stützelementen 14 oder Gruppen von Stützelementen einen zeitlich konstanten Volumenstrom an Druckflüssigkeit zuführt.

Die Pumpe 13 saugt ebenfalls aus dem Vorratsbehälter 9 Druckflüssigkeit an, die über eine Steuereinrichtung 16 entweder der Zuleitung 46 oder der Zuleitung 47 und über diese den den zusätzlichen Kolben/Zylindereinheiten 42,43 einzelnen Stützelemente 14 zugeleitet wird. Diese Druckflüssigkeit wird in der Steuereinrichtung 16 auf einen bestimmten Druck eingestellt. Auch die Zuleitungen 46 und 47 können Mehrfachleitungen sein, mit denen Gruppen von Stützelementen 14 oder einzelne Stützelemente 14 beaufschlagt werden können.

Die den einzelnen Stützelementen zugeführte Druckflüssigkeit tritt über den Rand der Stützelemente 14 in den Zwischenraum 7 zwischen Querhaupt 3 und Innenumfang 4 der Hohlwalze 1 aus und wird daraus über die Leitung 8 von der Pumpe 11 abgesaugt und in den Vorratsbehälter 9 zurückgeführt.

Das Stützelement 14′ der Fig. 3 entspricht dem Stützelement 14 der Fig. 2 weitgehend und trägt insoweit auch die gleichen Bezugszahlen. Es besteht lediglich der konstruktive Unterschied, daß an dem Körper 28′ nicht ein zentraler Ansatz, sondern zwei zu den Zylinderkammern 29 koaxiale Ansätze 40′,40˝ angebracht sind und die an den Enden vorgesehenen Kolben 42′,42˝ in zwei Zylinderbohrungen 43′,43˝ eintauchen. Die oberen Zylinderkammern 44′,44˝ sind gemeinsam mit der Zuleitung 46, die unteren Zylinderkammern 45′,45˝ gemeinsam mit der Zuleitung 47 verbunden. Die Funktion des Stützelements 14′ ist die gleiche wie die des Stützelements 14.

In den dargestellten Ausführungsbeispielen sind jeweils zwei einzelne Kolben 34 zur Abstützung des Stützelements 14 bzw. 14′ vorgesehen, die einen Durchmesser von nur einem Drittel bis einem Viertel des Durchmessers der Stützelemente 14,14′ aufweisen. Es können statt der zwei Kolben 34 auch drei oder vier Kolben 34 vorhanden sein oder ein zu der Achse A konzentrischer Ringkolben, wobei dann die Zylinderbohrung 29 ebenfalls eine ringförmige Ausnehmung wäre. Auch die Kolben 42′,42˝ der Fig. 3 könnten dann durch einen Ringkolben ersetzt sein.

## Patentansprüche

1. Durchbiegungssteuerbare Walze (100),
mit einer den arbeitenden Walzenumfang (2) bildenden umlaufenden Hohlwalze (1) und einem diese der Länge nach durchgreifenden, rundum Abstand vom Innenumfang (4) der Hohlwalze (1) belassenden undrehbaren Querhaupt (3),
mit mindestens einem dem Querhaupt (3) radial unter dem Druck einer Druckflüssigkeit in mindestens einer Kolben/Zylindereinheit (34,29) verlagerbaren hydrostatischen Stützelement (14,14'), welches in seiner am Innenumfang (4) der Hohlwalze (1) zur Anlage bringbaren Anlagefläche (24) ringsum berandete Lagertaschen (25) aufweist, die über Drosselkanäle (33) mit der Zylinderkammer (39) der Kolben/Zylindereinheit (34, 29) in Verbindung stehen,
und mit mindestens einer zusätzlichen, separat mit Druckflüssigkeit beaufschlagbaren Kolben/Zylindereinheit (42, 43; 42', 43'; 42", 43"), deren einer Teil (42, 42', 42") mit dem Stützelement (14,14') und deren anderer Teil (43, 43'; 43") mit dem Querhaupt (3) verbunden ist,
dadurch gekennzeichnet,
daß die zusätzliche Kolben/Zylindereinheit (42, 43; 42', 43'; 42", 43") einen rückwärtigen Ansatz (40, 40', 40") des Stützelements (14,14') mit einem Kolben (42, 42', 42") umfaßt, der in eine im Querhaupt (3) angeordnete Zylinderbohrung (43, 43', 43") eintaucht, und daß Zuleitungen (46,47) für Druckflüssigkeit oberhalb und unterhalb des Kolbens (42, 42', 42") in die Zylinderbohrung (43, 43', 43") münden, so daß auf das Stützelement (14,14') unabhängig von dem Druck in dem Zylinderraum (39) des Stützelements (14,14') sowohl gegen den Innenumfang (4) der Hohlwalze (1) gerichtete als auch von dem Innenumfang (4) der Hohlwalze (1) hinweg gerichtete Kräfte ausübbar sind.

2. Walze nach Anspruch 1, dadurch gekennzeichnet , daß eine Mengenregeleinrichtung für die der Zylinderkammer (39) des Stützelements (14,14') zugeführte Druckflüssigkeit vorgesehen ist.

## Claims

1. A controlled deflection roll (100),
having a rotating shell (1) as the operative roll periphery (2) and a non-rotating beam (3) which extends through the shell (1) over the length thereof at a distance all the way round from the shell inner periphery (4),
having at least one hydrostatic support element (14, 14') which is displaceable relatively to the beam (3) radially by the pressure of a pressure liquid in at least one piston and cylinder unit (34, 29) and which has edged-round bearing pockets (25) in its contact surface (24) engageable with the shell inner periphery (4), the bearing pockets (25) communicating by way of restrictor ducts (33) with the cylinder chamber (39) of the piston and cylinder unit (34, 29),
and having at least one additional piston and cylinder unit (42, 43; 42', 43'; 42'', 43'') adapted to be fed separately with pressure liquid and having one part (42, 42', 42'') communicating with the support element (14, 14') and the other part (43, 43'; 43'') communicating with the beam,
characterised in that
the additional piston and cylinder unit (42, 43; 42', 43'; 42'', 43'') comprises a rear attachment (40, 40', 40'') of the support element (14, 14'), with a piston (42, 42', 42'') which extends into a cylinder bore (43, 43', 43'') in the beam (3), and pressure liquid feed lines (46, 47) extend into the cylinder bore (43, 43', 43'') above and below the piston (42, 42', 42'') so that the support element (14, 14') can have exerted on it, independently of the pressure in the support element chamber (39), forces directed towards the shell inner periphery (4) and forces directed away therefrom.

2. A roll according to claim 1, characterised in that a volume control system for the pressure liquid supplied to the cylinder chamber (39) of the support element (14, 14') is provided.

## Revendications

1. Cylindre (100) à fléchissement réglable avec un cylindre creux tournant, formant le pourtour actif du cylindre actif (2) et avec une traverse (3) ne pouvant pas tourner venant en prise sur toute la longueur avec le cylindre, ménageant un intervalle tout autour du pourtour intérieur (4) du cylindre creux (1),
avec au moins un élément d'appui (14, 14') hydrostatique pouvant être monté dans au moins une unité de vérin (34, 29) radialement par rapport à la traverse (3) et agissant sous la pression d'un liquide sous pression, élément d'appui qui présente sur sa surface d'appui (24), pouvant être mise en appui sur le pourtour intérieur (4) du cylindre creux (1), des poches d'appui (25) bordées tout au tour, qui sont en liaison par des canaux d'étranglement (33) avec la chambre (39) de l'unité de vérin (34, 29),
et avec au moins une unité de vérin (42, 43 ; 42', 43' ; 42", 43") additionnelle, pouvant être actionnée séparément par le liquide sous pression, unité dont une partie (42, 42', 42") est reliée à l'élément d'appui (14, 14') et dont une autre partie (43, 43', 43") est reliée à la traverse (3).
caractérisé en ce que l'unité additionnelle de vérin (42, 43 ; 42', 43' ; 42", 43") comporte un appendice à l'arrière (40, 40', 40") de l'élément d'appui (14, 14') avec un piston (42, 42', 42") qui plonge dans un alésage cylindrique (43, 43', 43") disposé dans la traverse (3) et en ce que des canalisations (46, 47) d'amenée du liquide sous pression débouchent au-dessus et au-dessous du piston (42, 42', 42") dans l'alésage cylindrique (43, 43', 43") de telle sorte que sur l'élément d'appui (14, 14') peuvent s'exercer des forces indépendamment de la pression dans la chambre cylindrique (39) de l'élément d'appui (14, 14') ainsi que dirigées contre le pourtour intérieur (4) du cylindre creux (1) comme aussi s'écartant du pourtour intérieur (4) du cylindre creux (1).

2. Cylindre selon la revendication 1, caractérisé en ce qu'un dispositif de réglage du débit est prévu pour le liquide sous pression amené à la chambre de cylindre (39) de l'élément d'appui (14, 14').
